# EUROPÄISCHE PATENTANMELDUNG

(11) **EP 3 806 235 A1**
(43) Veröffentlichungstag der Anmeldung: **14.04.2021**
(21) Anmeldenummer: 20195624.0
(22) Anmeldetag: 11.09.2020
(51) Int. Cl.: H01M 50/216, H01M 50/559

(54) **BATTERIEKONTAKTIERUNGSANORDNUNG SOWIE VERFAHREN ZUM HERSTELLEN DER BATTERIEKONTAKTIERUNGSANORDNUNG**

(30) Priorität: 08.10.2019 DE 102019126967
(71) Anmelder: Huf Hülsbeck & Fürst GmbH & Co. KG, 42551 Velbert (DE)
(72) Erfinder: KOZIOL, Miroslaw, 42279 Wuppertal (DE); GELDMACHER, Alexander, 42113 Wuppertal (DE)
(74) Vertreter: Zenz Patentanwälte Partnerschaft mbB

(57) **Zusammenfassung**

Die vorliegende Erfindung betrifft eine Batteriekontaktierungsanordnung sowie ein Verfahren zum Herstellen einer solchen Batteriekontaktierungsanordnung. Bei bekannten Batteriekontaktierungsanordnungen werden zwei unterschiedliche geformte Batteriekontakte verwendet, was den Herstellungsaufwand erhöht. Die erfindungsgemäße Batteriekontaktierungsanordnung umfasst eine Grundplatte (40) mit einer Mehrzahl von Leiterbahnen (41, 42), einen mit einer Leiterbahn (41) elektrisch gekoppelten Plus-Batteriekontakt (20") mit einem Grundkörper (23') und zumindest einem an den Grundkörper angrenzenden Kontaktierungsbereich (21', 22'), einen mit einer Leiterbahn (42) elektrisch gekoppelten Minus-Batteriekontakt (30") mit einem Grundkörper (33', 73') und zumindest einem an den Grundkörper angrenzenden Kontaktierungsbereich (31', 32'), wobei die Grundkörper sowie die Kontaktierungsbereiche des Minus-Batteriekontakts und des Plus-Batteriekontakts identisch ausgebildet und aneinander ausgerichtet sind.

## Beschreibung

Die vorliegende Erfindung betrifft eine Batteriekontaktierungsanordnung sowie ein Verfahren zum Herstellen einer solchen Batteriekontaktierungsanordnung.

Batteriekontaktierungsanordnungen sind aus dem Stand der Technik bekannt und werden beispielsweise in Kraftfahrzeugschlüsseln oder ID-Gebern für Kraftfahrzeuge verwendet. Bekannte Batteriekontaktierungsanordnungen umfassen einen Plus-Batteriekontakt sowie einen Minus-Batteriekontakt, die mit Leiterbahnen einer Leiterplatte elektrisch gekoppelt sind. Vor dem Anordnen der Batteriekontakte auf der Leiterplatte werden diese einzeln hergestellt und in die notwendige Form gebracht. Der Nachteil bekannter Batteriekontaktierungsanordnungen ist, dass das Herstellen insbesondere der Batteriekontakte zeitaufwendig und kostenintensiv ist. Es ist daher die Aufgabe der vorliegenden Erfindung, ein Verfahren bereitzustellen, mit welchem eine Batteriekontaktierungsanordnung schnell und kostengünstig herstellbar ist.

Es ist ferner Aufgabe der vorliegenden Erfindung, eine kostengünstige und einfach herstellbare Batteriekontaktierungsanordnung bereitzustellen.

Die Aufgabe wird unter anderem gelöst mit einem Verfahren gemäß Patentanspruch 1. Bei dem erfindungsgemäßen Verfahren zum Herstellen einer Batteriekontaktierungsanordnung wird zunächst ein verformbares leitfähiges Flachprodukt bereitgestellt, wobei es sich beispielsweise um ein einfaches Blech handeln kann. Alternativ kann das leitfähige verformbare Flachprodukt auch ein verformbares Flachprodukt mit einer leitfähigen Beschichtung sein. Aus dem Flachprodukt werden zwei flache Batteriekontakte mit identischer Kontur bzw. Grundfläche herausgetrennt, wobei die flachen Batteriekontakte jeweils zumindest einen Kontaktierungsbereich und einen an den Kontaktierungsbereich angrenzenden Grundkörper aufweisen. Der Kontaktierungsbereich der Batteriekontakte ist im späteren Einsatzfall dazu da, einen Kontakt zwischen dem Batteriekontakt als solchem und dem Plus- bzw. Minuspol einer zu kontaktierenden Batterie herzustellen. Zumindest einer der beiden flachen Batteriekontakte wird zu einem geformten Batteriekontakt mit einer von der Kontur eines flachen Batteriekontaktes abweichenden Kontur umgeformt. In Abhängigkeit von der notwendigen genauen Ausgestaltung der Batteriekontaktierungsanordnung, die wiederum von dem Anwendungsfall abhängig ist, kann ein in dem vorhergehenden Verfahrensschritt in einem entsprechenden Werkzeug hergestellter flacher Batteriekontakt oder zwei der flachen Batteriekontakte umgeformt werden. Wiederum in Abhängigkeit von der genauen Ausgestaltung der späteren Batteriekontaktierungsanordnung können die beiden flachen Batteriekontakte gleich oder unterschiedlich umgeformt werden. Das Umformen selbst kann in einem oder mehreren Einzelschritten erfolgen. Abschließend werden zwei Batteriekontakte, wobei es sich um zwei umgeformte oder einen flachen und einen umgeformten Batteriekontakt handeln kann, elektrisch leitend derart mit Leiterbahnen einer Grundplatte verbunden, das ein Plus-Batteriekontakt und ein Minus-Batteriekontakt zur Kontaktierung einer Batterie ausgebildet werden.

Erfindungsgemäß werden der Plus-Batteriekontakt und der Minus-Batteriekontakt also aus identischen flachen Batteriekontakten hergestellt, so dass es nicht mehr notwendig ist, wie dies beim Stand der Technik der Fall ist, zwei unterschiedlich konturierte flache Batteriekontakte mit zwei unterschiedlich konfigurierten Werkzeugen bereitzustellen, aus welchen dann in unterschiedlichen Arbeitsschritten die auf eine Grundplatte zu montierenden Batteriekontakte geformt werden, die dann elektrisch leitend mit den Leiterbahnen gekoppelt den Plus-Batterie- und den Minus-Batteriekontakt bilden. Wie genau die Anordnung der Batteriekontakte zum Ausbilden des Plus-Batteriekontaktes und des Minus-Batteriekontaktes auf der Grundplatte erfolgt ist abhängig von dem späteren Anwendungsbereich und insbesondere den später zu kontaktierenden Batterien.

Bei der vorliegenden Erfindung können die Arbeitsschritte des Heraustrennens und Umformens in unterschiedlichen Werkzeugen oder in einem Werkzeug erfolgen, beispielsweise in einem Folgeverbundwerkzeug.

Im Zuge dieser Anmeldung bezeichnet der Begriff des "flachen Batteriekontaktes" den aus dem leitfähigen Flachprodukt herausgetrennten Batteriekontakt, der noch keiner Umformung unterzogen wurde. Im Zuge des erfindungsgemäßen Verfahrens kann zumindest ein flacher Batteriekontakt verwendet werden, um einen Plus- oder Minus-Batteriekontakt zu bilden, indem der flache Batteriekontakt mit einer Leiterbahn elektrisch gekoppelt wird. Unter dem Begriff des "geformten Batteriekontaktes" wird ein vormals flacher Batteriekontakt verstanden, der in zumindest einem Bereich derart umgeformt wurde, dass das Material nicht mehr flach, das heißt zweidimensional ausgebildet ist, sondern das zwischen Abschnitten des vormals flachen Batteriekontaktes ein Winkel kleiner 180 Grad ausgebildet ist. So ist es beispielsweise denkbar, einen flachen Batteriekontakt derart umzuformen, dass zwei Bereiche bestehen, die einen Winkel von 90 Grad zueinander bilden, wobei einer der Bereiche den späteren Kontaktierungsbereich und der andere den Grundkörper bildet.

Mit dem Begriff des Plus- oder Minus-Batteriekontaktes wird ein flacher oder geformter Batteriekontakt bezeichnet, der mit einer Leiterbahn einer Grundplatte der Batteriekontaktierungsanordnung elektrisch leitend gekoppelt ist. Bei der Grundplatte wird es sich regelmäßig um eine Leiterplatte handeln, auf der mehrere elektrische Bauelemente befestigt sind oder befestigt werden können. Da es erfindungsgemäß nicht notwendig ist, zwei unterschiedliche flache Batteriekontakte bereitzustellen, kann das erfindungsgemäße Verfahren genutzt werden, um eine Batteriekontaktierungsanordnung preisgünstiger und rascher herzustellen.

Dies bedeutet jedoch nicht, dass beide Batteriekontakte keiner weiteren Verarbeitung unterzogen werden können sobald sie als identische flache Batteriekontakte bereitgestellt wurden. Bei einer bevorzugten Ausführungsform des erfindungsgemäßen Verfahrens ist es daher vorgesehen, dass ein Batteriekontakt vor dem Verbinden mit der Grundplatte einem weiteren Trennschritt unterzogen wird, bei welchem ein Abschnitt des Batteriekontaktes entfernt wird. Dieser Trennschritt kann an einem flachen Batteriekontakt oder einem umgeformten Batteriekontakt durchgeführt werden, wobei es bevorzugt ist, dass ein flacher Batteriekontakt verwendet wird. So ist es beispielsweise vorstellbar, dass die beiden identischen flachen Batteriekontakte mit Befestigungsabschnitten aus dem leitfähigen Flachprodukt herausgelöst werden, vor Aufbringen der Batteriekontakte auf der Grundplatte der Befestigungsabschnitt aber bei einem Batteriekontakt entfernt wird, um so beispielsweise weniger Platz auf der Grundplatte zu belegen. Bei der detaillierten Beschreibung einer Ausführungsform des erfindungsgemäßen Verfahrens wird dies weiter unten näher erläutert.

Bei dem Kontaktierungsbereich kann es sich beispielsweise einfach um einen Abschnitt des umgeformten Batteriekontaktes handeln. Um die Kontaktierung zwischen dem Kontaktbereich und einer zu kontaktierenden Batterie zu verbessern, ist es bei einer bevorzugten Ausführungsform vorgesehen, dass bei zumindest einem Kontaktierungsbereich ein Kontaktierungsvorsprung ausgebildet wird, der im Kontaktierungszustand den eigentlichen Kontakt zu der Batterie herstellt. Der Kontaktierungsvorsprung kann bereitgestellt werden, indem in dem Kontaktierungsbereich eine Erhebung aus einem elektrisch leitfähigen Material aufgebracht wird. Alternativ kann der Kontaktierungsvorsprung ausgebildet bzw. bereitgestellt werden, indem der Kontaktierungsvorsprung aus dem Kontaktierungsbereich gepresst wird, was im Zuge des Heraustrennens des flachen Batteriekontaktes aus dem leitfähigen Flachprodukt geschehen kann oder in einem separaten Verfahrensschritt nach dem Heraustrennen. Wie genau das Heraustrennen der flachen Batteriekontakte aus den leitfähigen Flachprodukten geschieht ist für die Erfindung nicht wesentlich. Beispielsweise kann der flache Batteriekontakt aus dem leitfähigen Flachprodukt herausgestanzt werden. Alternativ ist es denkbar, die flachen Batteriekontakte mittels eines Lasers aus dem leitfähigen Flachprodukt herauszuschneiden.

Um eine konstruktiv besonders einfache Batteriekontaktierungsanordnung zu schaffen ist es bei einer bevorzugten Ausführungsform des Verfahrens vorgesehen, dass zwei Batteriekontakte elektrisch leitend derart mit Leiterbahnen der Grundplatte verbunden werden, dass die Kontaktierungsbereiche von Plus-Batteriekontakt und Minus-Batteriekontakt einen Winkel zwischen 30° und 135° zueinander ausbilden. Zur Kontaktierung einer Batterie kann man diese dann einfach auf einen der Batteriekontakte auflegen, so dass die Unterseite beispielsweise einer Knopfbatterie kontaktiert wird. Der andere seitlich angeordnete Batteriekontakt kann dann die Seitenfläche der Knopfbatterie kontaktieren.

Um das Umformen eines flachen Batteriekontaktes zu einem geformten Batteriekontakt zu erleichtern ist es bei einer bevorzugten Ausführungsform des erfindungsgemäßen Verfahrens vorgesehen, dass vor dem Umformen eines Batteriekontaktes die Materialstärke in dem Umformungsbereich vermindert wird. Dies kann beispielsweise erreicht werden, indem der flache Batteriekontakt in ein Presswerkzeug eingelegt wird, welches lediglich den Umformungsbereich presst.

Die oben genannte Aufgabe wird ferner gelöst durch eine Batteriekontaktierungsanordnung gemäß Patentanspruch 8. Die erfindungsgemäße Batteriekontaktierungsanordnung umfasst eine Grundplatte mit einer Mehrzahl von Leiterbahnen, einen mit einer Leiterbahn elektrisch gekoppelten Plus-Batteriekontakt mit einem Grundkörper und zumindest einem an den Grundkörper angrenzenden Kontaktierungsbereich sowie einen mit einer Leiterbahn elektrisch gekoppelten Minus-Batteriekontakt mit einem Grundkörper und zumindest einem an den Grundkörper angrenzenden Kontaktierungsbereich. Erfindungsgemäß sind die Grundkörper sowie die Kontaktierungsbereiche des Minus-Batteriekontaktes und des Plus-Batteriekontaktes identisch ausgebildet und aneinander ausgerichtet. Obwohl die Grundkörper sowie die Kontaktierungsbereiche der Batteriekontakte identisch ausgebildet und aneinander ausgerichtet sind, ist es jedoch für die vorliegende Erfindung nicht notwendig, dass Plus- und Minus-Batteriekontakt auch identisch mit den Leiterbahnen des Grundkörpers verbunden sind, wie weiter unten bei der Beschreibung von Ausführungsformen der erfindungsgemäßen Batteriekontaktierungsanordnung näher dargelegt ist.

Bei einer bevorzugten Ausführungsform der erfindungsgemäßen Batteriekontaktierungsanordnung weist der Plus- oder der Minus-Batteriekontakt zumindest einen Befestigungsabschnitt auf. Zwar sind die beiden Batteriekontakte nach dem Bereitstellen aus dem Flachprodukt identisch, dies schließt aber nicht aus, dass einer der Batteriekontakte vor oder nach dem Umformen einem weiteren Trennschritt unterzogen wird, so dass beide Batteriekontakte vor Koppeln mit den Leiterbahnen unterschiedliche Konturen aufweisen können. So ist es beispielsweise denkbar, dass ein Batteriekontakt einen Befestigungsabschnitt aufweist, über welchen der Batteriekontakt stehend auf der Grundplatte befestigt wird.

Zur besseren und auch schonenderen Kontaktierung einer Batterie ist es bei einer bevorzugten Ausführungsform vorgesehen, dass zumindest einer der Kontaktierungsbereiche einen Kontaktierungsvorsprung aufweist. Diese bzw. dieser kann als eine Erhebung aus einem elektrisch leitfähigen Material ausgebildet sein. Alternativ kann der Kontaktierungsvorsprung aus dem Material des Kontaktierungsbereichs geformt sein.

Um ein besonders einfaches Einlegen und Stützen einer Batterie zu ermöglichen ist es bei einer bevorzugten Ausführungsform der erfindungsgemäßen Batteriekontaktierungsanordnung vorgesehen, dass die zwei Batteriekontakte elektrisch leitend derart mit Leiterbahnender Grundplatte verbunden sind, dass die Kontaktierungsbereiche von Plus-Batteriekontakt und Minus-Batteriekontakt einen Winkel zwischen 30° und 135° zueinander ausbilden.

Im Folgenden werden verschiedene bevorzugte Ausführungsformen des erfindungsgemäßen Verfahrens zum Herstellen einer Batteriekontaktierungsanordnung sowie bevorzugte Ausführungsformen der erfindungsgemäßen Batteriekontaktierungsanordnung als solcher unter Bezugnahme auf die Zeichnung beschrieben, in welcher
Figuren 1a-1d verschiedene Verfahrensschritte einer ersten bevorzugten Ausführungsform des erfindungsgemäßen Verfahrens zum Herstellen einer bevorzugten ersten Ausführungsform der erfindungsgemäßen Batteriekontaktierungsanordnung zeigen,
Figur 2 eine Seitenansicht einer zweiten bevorzugten Ausführungsform der Batteriekontaktierungsanordnung mit eingelegter Batterie zeigt, und
Figuren 3a-3e verschiedene Verfahrensschritte einer zweiten bevorzugten Ausführungsform des erfindungsgemäßen Verfahrens zum Herstellen einer dritten bevorzugten Ausführungsform der erfindungsgemäßen Batteriekontaktierungsanordnung zeigen.

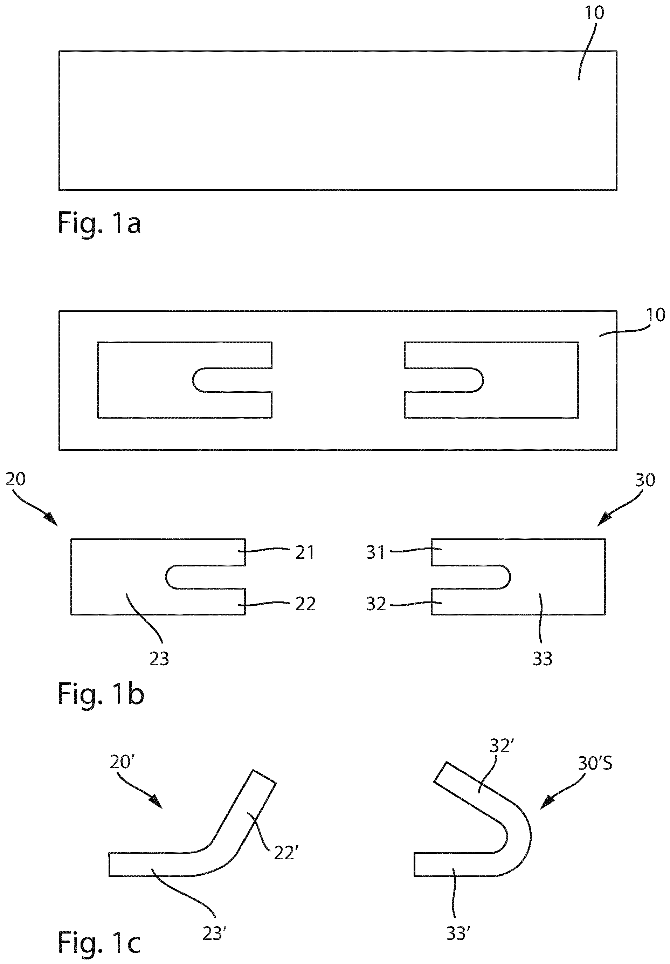

Figuren 1a-1d zeigen verschiedene Verfahrensschritte einer ersten bevorzugten Ausführungsform des erfindungsgemäßen Verfahrens zum Herstellen einer bevorzugten ersten Ausführungsform der erfindungsgemäßen Batteriekontaktierungsanordnung. In einem ersten Verfahrensschritt wird ein verformbares leitfähiges Flachprodukt 10, bei welchem es sich beispielsweise um ein einfaches Blech handeln kann, bereitgestellt. Alternativ kann das verformbare leitfähige Flachprodukt auch als verformbares Flachprodukt mit leitfähiger Beschichtung bereitgestellt werden. In einem nachfolgenden Verfahrensschritt werden aus dem verformbaren leitfähigen Flachprodukt 10 zwei flache Batteriekontakte 20, 30 mit identischen Konturen herausgetrennt, beispielsweise herausgestanzt oder mit einem Laser herausgeschnitten. In Figur 1b sind zwei identische Batteriekontakte 20, 30 gezeigt, wobei die dargestellten Batteriekontakte jeweils zwei Kontaktierungsbereiche 21, 22 und 31, 32 und einen Grundkörper 23, 33 aufweisen, wobei die Kontaktierungsbereiche jeweils an den Grundkörper des jeweiligen Batteriekontaktes angrenzen.

Die beiden flachen Batteriekontakte 20, 30 werden zu geformten Batteriekontakten 20', 30' umgeformt, wobei sich die Kontur der umgeformten Batteriekontakte 20', 30' von der Kontur der flachen Batteriekontakte 20, 30 unterscheidet. Im vorliegenden Fall sind die Kontaktierungsbereiche 21, 22 und 31, 32 bei dem Umformschritt aus der vormals von den flachen Batteriekontakten 20, 30 ausgebildeten Ebene nach "oben" gebogen worden, wobei bei dem umgeformten Batteriekontakt 20' ein Winkel von etwa 100° und bei dem umgeformten Batteriekontakt 30' ein Winkel von etwa 45° zwischen dem Grundkörper und den Kontaktierungsbereichen eingestellt ist, wie dies gemäß der Seitenansicht gemäß Figur 1c erkennbar ist. Gemäß der ersten bevorzugten Ausführungsform des erfindungsgemäßen Verfahrens werden flache Batteriekontakte in U-Form bereitgestellt, bei einer nachfolgend beschriebenen weiteren bevorzugten Ausführungsform sind die Batteriekontakte abweichend ausgebildet.

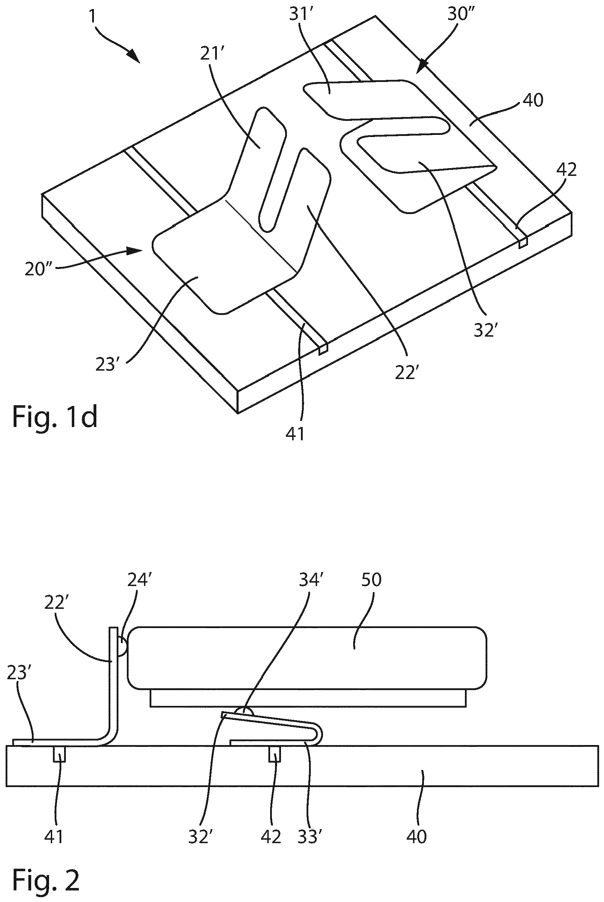

Figur 1d zeigt eine schematische Schrägansicht der ersten Ausführungsform der erfindungsgemäßen Batteriekontaktierungsanordnung, welche gemäß der ersten Ausführungsform des erfindungsgemäßen Verfahrens hergestellt ist. Die erfindungsgemäße Batteriekontaktierungsanordnung 1 umfasst eine Grundplatte 40 mit zwei Leiterbahnen 41, 42, die elektrisch mit jeweils einem Batteriekontakt gekoppelt sind. Leiterbahn 41 ist mit dem in Figur 1c links dargestellten Batteriekontakt 20' zu dem Plus-Batteriekontakt 20" gekoppelt und Leiterbahn 42 ist mit dem in Figur 1c rechts dargestellten Batteriekontakt 30' zu dem Minus-Batteriekontakt 30" gekoppelt. Der Plus-Batteriekontakt 20" umfasst einen Grundkörper 23', dessen Unterseite flach auf der Grundplatte 40 aufliegt und der mit der Leiterbahn 41 elektrisch gekoppelt ist. An den Grundkörper 23' schließen sich zwei Kontaktierungsbereiche 21' und 22' an. Entsprechend ist der Batteriekontakt 30' mit der Leiterbahn 42 zu dem Minus-Batteriekontakt 30" gekoppelt. Der Minus-Batteriekontakt 30" ist entsprechend dem Plus-Batteriekontakt ausgebildet, mit dem Unterschied, dass der Winkel zwischen dem Grundkörper 33' und den Kontaktierungsbereichen 31' und 32' 45° beträgt, wohingegen der Winkel bei dem Plus-Batteriekontakt 20" etwa 100° beträgt.

Figur 2 zeigt eine Seitenansicht einer zweiten bevorzugten Ausführungsform der Batteriekontaktierungsanordnung, wobei bei dieser Ausführungsform Kontaktierungsvorsprünge vorgesehen sind. In Figur 2 ist eine Batterie 50 dargestellt, deren unterer Minuspol über einen Kontaktierungsvorsprung 34' mit dem Minus-Batteriekontakt verbunden ist. Der Pluspol der Batterie 50 ist über einen Kontaktierungsvorsprung 24' des Plus-Batteriekontaktes 20" kontaktiert. Bei einem Vergleich der Figuren 1d und 2 eist zu erkennen, dass die Batteriekontakte 20" und 30" beim Einlegen der Batterie 50 verformt werden, und zwar unabhängig vom Vorhandensein von Kontaktierungsvorsprüngen. Dies bedingt, dass die Batterie 50 bei diesen Ausführungsformen in der Batteriekontaktierungsanordnung durch ein nicht dargestelltes Bauteil fixiert werden muss. Dabei kann es sich beispielsweise um ein Bauteil eines KFZ-Schlüssels handeln, beispielsweise um einen Gehäuseabschnitt. Wie genau die Batterie 50 in der Batteriekontaktierungsanordnung 1 zum Kontaktieren des Plus- und Minus-Batteriekontaktes fixiert wird ist jedoch für die vorliegende Erfindung nicht wesentlich. Bei alternativen erfindungsgemäßen Ausführungsformen kann eine Fixierung durch ein weiteres Bauteil aufgrund der Form der Batteriekontakte überflüssig sein, beispielsweise wenn die Batterie in diesen geklemmt wird.

Unabhängig davon, ob das leitfähige Flachprodukt "im Kern" leitfähig ist oder nicht, kann ein Batteriekontakt zumindest abschnittsweise beschichtet sein, um beispielsweise Abriebfestigkeit oder die Kontaktierung im Bereich der Kontaktierungsbereiche zu verbessern.

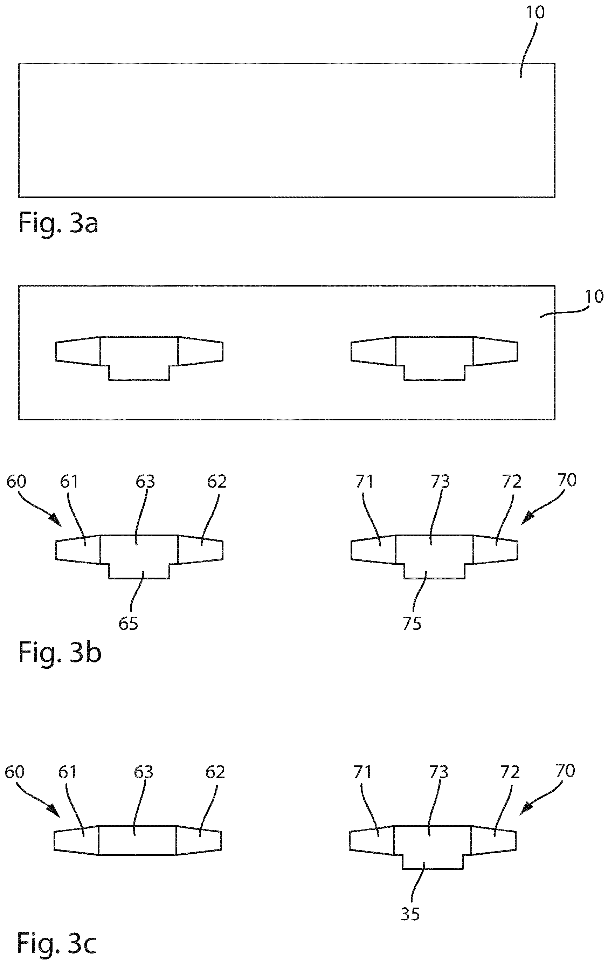

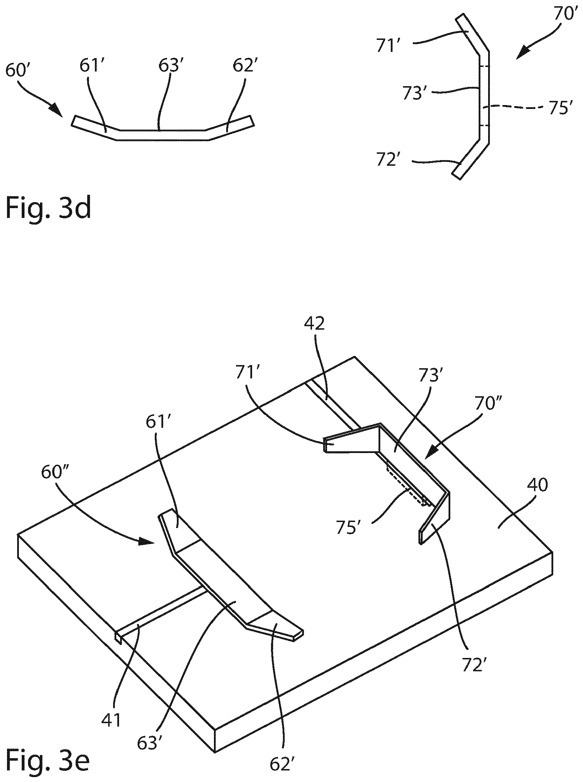

Die Figuren 3a-3e zeigen eine zweite bevorzugte Ausführungsform des erfindungsgemäßen Verfahrens zum Herstellen einer dritten bevorzugten Ausführungsform der erfindungsgemäßen Batteriekontaktierungsanordnung. Wie Figur 3b zu entnehmen ist, sind die flachen Batteriekontakte bei dieser Ausführungsform anders ausgestaltet. Die flachen Batteriekontakte 60, 70 weisen bei Stirnseiten von Grundkörpern 63, 73 jeweils zwei Kontaktierungsbereiche 61, 62 und 71, 72 auf. Bei den Grundkörpern 63, 73 sind ferner zwei Befestigungsbereiche 65, 75 vorgesehen. In Abweichung von der ersten Ausführungsform des erfindungsgemäßen Verfahrens werden in einem weiteren Verfahrensschritt, der bildlich nicht näher dargelegt ist, bei dem flachen Batteriekontakt 60 vor dem Umformen dieses Batteriekontaktes der Befestigungsbereich 65 abgetrennt, so dass sich die beiden flachen Batteriekontakte vor dem Umformen in ihrer Grundfläche bzw. Kontur unterscheiden, was jedoch bei der vorliegenden Erfindung grundsätzlich nicht stört, da die beiden Batteriekontakte auf einen identischen Batteriekontakt zurückgehen. Figur 3d zeigt eine Seitenansicht des Batteriekontaktes 60' sowie eine Draufsicht auf Batteriekontakt 70' - in entsprechenden Ausrichtungen werden die Batteriekontakte auf einer Grundplatte 40 angeordnet, was in Figur 3e gezeigt ist, die eine Schrägansicht der dritten bevorzugten Ausführungsform der erfindungsgemäßen Batteriekontaktierungsanordnung zeigt. Der Batteriekontakt 60' ist auf dem Grundkörper 63' aufliegend mit der Leiterbahn 41 zum Ausbilden des Plus-Batteriekontaktes 60" gekoppelt. Die beiden Kontaktierungsbereiche 61' und 62' sind in dem Umformungsschritt derart umgeformt, dass sie aus der Ebene des Grundkörpers, und damit der Grundplatte 40, herausragen. Der Batteriekontakt 70' ist abweichend von dem Batteriekontakt 60' mit der Leiterbahn 42 gekoppelt, nämlich indem der Befestigungsabschnitte 75' in eine Ausnehmung oder eine Durchgangsöffnung in der Grundplatte 40 bzw. der Leiterbahn 42 eingebracht ist, so dass der Grundkörper 73' in Bezug auf den Grundkörper 63' um 90 Grad gedreht ist. Bei alternativen Ausführungsformen ist es denkbar, dass der Befestigungsabschnitt 75' die Grundplatte durchdringt und auf der "Rückseite" wieder austritt, wo dann ein Bereich des Befestigungsabschnitts 75' um 90° umgebogen werden kann, um so den Batteriekontakt (zusätzlich) an der Grundplatte zu befestigen. Ferner ist es denkbar, den Befestigungsabschnitt 75' vor dem Befestigen um 90° umzubiegen und dann den Batteriekontakt über den umgebogenen Befestigungsabschnitt an der Grundplatte bzw. einer Leiterbahn zu befestigen - beispielsweise durch Löten.

Die Kontaktierungsbereiche 71', 72' des Minus-Batteriekontaktes 70" sind entsprechend hin zu dem Plus-Batteriekontakt umgeformt, so dass der Plus-Batteriekontakt 60" und der Minus-Batteriekontakt 70" eine Art halboffene Wanne zur Aufnahme einer nicht dargestellten Batterie bilden.

Bei weiteren denkbaren Ausführungsformen des erfindungsgemäßen Verfahrens sowie der Batteriekontaktierungsanordnung sind eine Vielzahl unterschiedlich geformter oder angeordneter Batteriekontakte denkbar. Die gezeigten Ausführungsformen sind bewusst konstruktiv einfach gehalten, um die Erfindung klar wiedergeben zu können.

## Patentansprüche

1. Verfahren zum Herstellen einer Batteriekontaktierungsanordnung (1), wobei
ein verformbares leitfähiges Flachprodukt (10) bereitgestellt wird,
aus dem Flachprodukt (10) zwei flache Batteriekontakte (20, 30; 60, 70) mit identischer Kontur herausgetrennt werden, wobei die flachen Batteriekontakte (20, 30; 60, 70) jeweils zumindest einen Kontaktierungsbereich (21, 22, 31, 32; 61, 62, 71, 72) und einen an den Kontaktierungsbereich angrenzenden Grundkörper (23, 33; 63, 73) aufweisen,
zumindest ein flacher Batteriekontakt (20, 30; 60, 70) zu einem geformten Batteriekontakt (20', 30'; 60', 70') mit einer von der Kontur eines flachen Batteriekontakts (20, 30; 60, 70) abweichenden Kontur umgeformt wird,
zwei Batteriekontakte (20', 30'; 60', 70') elektrisch leitend derart mit Leiterbahnen (41, 42) einer Grundplatte (40) verbunden werden, dass ein Plus-Batteriekontakt (20", 60") und ein Minus-Batteriekontakt (30", 70") zur Kontaktierung einer Batterie ausgebildet werden.

2. Verfahren zum Herstellen einer Batteriekontaktierungsanordnung (1) nach Anspruch 1, **dadurch gekennzeichnet, dass** ein Batteriekontakt (60) vor dem Verbinden mit der Grundplatte einem weiteren Trennschritt unterzogen wird.

3. Verfahren zum Herstellen einer Batteriekontaktierungsanordnung (1), **dadurch gekennzeichnet, dass** bei zumindest einem Kontaktierungsbereich (21', 22', 31', 32') ein Kontaktierungsvorsprung (24', 34') ausgebildet wird.

4. Verfahren zum Herstellen einer Batteriekontaktierungsanordnung (1) nach Anspruch 3, **dadurch gekennzeichnet, dass** der Kontaktierungsvorsprung (24', 34') ausgebildet wird, indem in dem Kontaktierungsbereich (21', 22', 31', 32') eine Erhebung aus einem elektrisch leitfähigen Material aufgebracht wird.

5. Verfahren zum Herstellen einer Batteriekontaktierungsanordnung (1) nach Anspruch 3, **dadurch gekennzeichnet, dass** der Kontaktierungsvorsprung (24', 34') ausgebildet wird, indem der Kontaktierungsvorsprung aus dem Kontaktierungsbereich (21', 22', 31', 32') gepresst wird.

6. Verfahren zum Herstellen einer Batteriekontaktierungsanordnung (1) nach einem der Ansprüche 1 - 5, **dadurch gekennzeichnet, dass** zwei Batteriekontakte (20', 30') elektrisch leitend derart mit Leiterbahnen (41, 42) der Grundplatte (40) verbunden werden, dass die Kontaktierungsbereiche (21', 22', 31', 32') von Plus-Batteriekontakt (20") und Minus-Batteriekontakt (30") einen Winkel zwischen 30° und 135° zueinander ausbilden.

7. Verfahren zum Herstellen einer Batteriekontaktierungsanordnung (1) nach einem der Ansprüche 1 - 6, **dadurch gekennzeichnet, dass** bei dem Umformen eines Batteriekontakts die Materialstärke in dem Umformungsbereich vermindert wird.

8. Batteriekontaktierungsanordnung (1), aufweisend
eine Grundplatte (40) mit einer Mehrzahl von Leiterbahnen (41, 42),
einen mit einer Leiterbahn (41) elektrisch gekoppelten Plus-Batteriekontakt (20", 60") mit einem Grundkörper (23', 63') und zumindest einem an den Grundkörper angrenzenden Kontaktierungsbereich (21', 22', 61', 62'),
einen mit einer Leiterbahn (42) elektrisch gekoppelten Minus-Batteriekontakt (30", 70") mit einem Grundkörper (33', 73') und zumindest einem an den Grundkörper angrenzenden Kontaktierungsbereich (31', 32', 71', 72'),
**dadurch gekennzeichnet, dass** die Grundkörper sowie die Kontaktierungsbereiche des Minus-Batteriekontakts und des Plus-Batteriekontakts identisch ausgebildet und aneinander ausgerichtet sind.

9. Batteriekontaktierungsanordnung (1) nach Anspruch 8, **dadurch gekennzeichnet, dass** der Plus- oder der Minus-Batteriekontakt (70") zumindest einen Befestigungsabschnitt (75') aufweisen.

10. Batteriekontaktierungsanordnung (1) nach Anspruch 8 oder 9, **dadurch gekennzeichnet, dass** zumindest einer der Kontaktierungsbereiche (21', 22', 31', 32') einen Kontaktierungsvorsprung (24', 34') aufweist.

11. Batteriekontaktierungsanordnung (1) nach Anspruch 10, **dadurch gekennzeichnet, dass** der Kontaktierungsvorsprung (24', 34') eine Erhebung aus einem elektrisch leitfähigen Material ist.

12. Batteriekontaktierungsanordnung (1) nach Anspruch 10, **dadurch gekennzeichnet, dass** der Kontaktierungsvorsprung (24', 34') aus dem Material des Kontaktierungsbereichs geformt ist.

13. Batteriekontaktierungsanordnung (1) nach einem der Ansprüche 9 - 12, **dadurch gekennzeichnet, dass** die zwei Batteriekontakte (20', 30') elektrisch leitend derart mit Leiterbahnen (41, 42) der Grundplatte (40) verbunden sind, dass die Kontaktierungsbereiche (21', 22', 31', 32') von Plus-Batteriekontakt (20") und Minus-Batteriekontakt (30") einen Winkel zwischen 30° und 135° zueinander ausbilden.
